# EUROPÄISCHE PATENTSCHRIFT

(11) **EP 3 957 371 B1**
(45) Veröffentlichungstag und Bekanntmachung des Hinweises auf die Patenterteilung: **12.11.2025**
(21) Anmeldenummer: 21192284.4
(22) Anmeldetag: 20.08.2021
(51) Int. Cl.: A62C 3/07, A62C 3/16, B60P 3/12

(54) **HAVARIEBEHÄLTER**
CONTAINER FOR DAMAGED ITEMS
RÉCIPIENT D'AVARIE

(30) Priorität: 20.08.2020 DE 202020104825 U
(43) Veröffentlichungstag der Anmeldung: 23.02.2022
(73) Patentinhaber: Paul Müller GmbH, 58802 Balve (DE)
(72) Erfinder: MÜLLER, Tobias, 58802 Balve (DE); MÜLLER, Matthias, 58802 Balve (DE); SCHARF, Matthias, 58802 Balve (DE)
(74) Vertreter: Haverkamp Patentanwälte PartG mbB

(56) Entgegenhaltungen:
- EP-A1- 3 872 002
- DE-B3- 102016 211 854
- DE-U1- 202019 104 363
- DE-U1- 202019 104 504

## Beschreibung

Die Erfindung betrifft einen Havariebehälter zum Aufnehmen eines havarierten Hybrid oder Elektrofahrzeuges, insbesondere mit einer beschädigten, brennenden oder möglicherweise sich entzündenden Batterie, umfassend eine aus einem Boden, zwei Seitenwänden, einer Vorderwand und einer Rückwand gebildeten Wanne, wobei die Seitenwände länger sind als die Vorderwand und die Rückwand, wobei die Rückwand zum Öffnen und Schließen der Wanne ganz oder teilweise verstellbar ist und wobei die Wanne bei geschlossener Rückwand flüssigkeitsdicht ist. Die Erfindung betrifft ferner ein Abschleppfahrzeug mit einer Transportfläche.

Elektro- und Hybridfahrzeuge sind typischerweise mit leistungsstarken Traktionsbatterien ausgestattet, beispielsweise mit Lithium-Ionen-Batterien. Diese werden benötigt, um das Fahrzeug rein elektrisch, oder den Verbrennungsmotor unterstützend, anzutreiben. Bei derartigen Batterien ist ein Batteriebrand ein Problem, da dieser nicht gelöscht werden kann. Der für die Verbrennung benötigte Sauerstoff wird durch die Zersetzung der Batterie selbst bereitgestellt. Ein Batteriebrand kann beispielsweise durch eine Überlastung der Batterien, einen technischen Defekt oder eine Beschädigung, hervorgerufen beispielsweise durch einen Unfall, entstehen. Ein solcher Brand kann, da das Batteriegehäuse typischerweise gekapselt ist, zunächst unbemerkt verbleiben. Gleiches gilt, wenn die Batterie beschädigt ist. In einem solchen Fall kann sich die Batterie auch noch nach einem Unfall, etwa während der Bergung oder während der Lagerung des Hybridoder Elektrofahrzeuges bemerkbar machen. Daher kann bei einem technischen Defekt oder nach einem Unfall mit einem solchen Fahrzeug eine Gefahr für Leib und Leben nicht ausgeschlossen werden.

Da ein Löschen eines in Erscheinung getretenen Batteriebrandes nicht möglich ist, muss abgewartet werden, bis die Batterie vollständig ausgebrannt ist. Dies kann in Abhängigkeit der Größe der eingesetzten Batterien bzw. Batteriemodule mitunter bis zu 30 Stunden dauern.

Um einen solchen Batteriebrand zu kontrollieren, wird eine brennende Batterie bzw. ein havariertes Hybrid- oder Elektrofahrzeug gekühlt, und zwar durch ein Übergießen bzw. Besprühen des havarierten Fahrzeuges und insbesondere seiner Batterie bzw. seiner Batteriemodule mit einer Kühlflüssigkeit, typischerweise Wasser.

Ein Havariebehälterstraßenfahrzeug, welches an einer Unfallstelle eingesetzt werden kann, ist aus DE 20 2019 104 363 U1 bekannt. Das als Anhänger ausgeführte, wannenartige Havariebehälterstraßenfahrzeug umfasst eine verschließbare Rückwand, die auch als Auffahrrampe dient, sowie eine Seilwinde, mit der ein havariertes Fahrzeug in das Wanneninnere gezogen werden kann. Mit diesem Havariebehälterstraßenfahrzeug kann ein havariertes Hybrid- oder Elektrofahrzeug aufgenommen, die Rückwand flüssigkeitsdicht verschlossen und anschließend die Wanne geflutet werden. Dieses Fahrzeug verfügt über Anschlüsse, über die ein Kühlmittel, typischerweise Wasser zugeführt und auch kontrolliert abgeführt werden kann.

Neben der Bergung havarierter Hybrid- oder Elektrofahrzeuge steht auch die Lagerung dieser Fahrzeuge, wenn kein Batteriebrand stattgefunden hat, ein Problem dar, da nicht ausgeschlossen werden kann, dass ein Batteriebrand noch entsteht. Derartige havarierte Hybrid- oder Elektrofahrzeuge dürfen nur auf einem Quarantäneplatz abgestellt werden. Dieses bedeutet, dass mit einem Abstand von 15 m um einen solchen Quarantäneplatz kein weiteres Fahrzeug oder andere potentiell brennbaren Gegenstände abgestellt sein dürfen. Für Werkstätten und Abschleppunternehmen stellt dies aufgrund des sich ergebenden, erhöhten Platzbedarfs eine Herausforderung dar, weshalb diese Unternehmen havarierte Hybrid- oder Elektrofahrzeuge in vielen Fällen gar nicht annehmen.

Vor diesem Hintergrund stellt sich die Erfindung die Aufgabe, einen Havariebehälter bereitzustellen, der als Quarantäneraum genutzt werden kann, sodass der Platzbedarf zur Lagerung von havarierten Hybrid- oder Elektrofahrzeugen verringert wird.

Wenn in diesen Ausführungen von "flüssigkeitsdicht" die Rede ist, ist damit gemeint, dass eine Leckage von Wasser zumindest weitestgehend unterbunden ist.

Die in einem Hybrid- oder Elektrofahrzeug angeordneten Batteriemodule, typischerweise bodenseitig gekapselt am Fahrzeug befindlich, sind im Rahmen dieser Ausführung auch als Batterie angesprochen.

Die vorstehend genannte Aufgabe wird durch einen Havariebehälter nach Anspruch 1 gelöst.

Durch diesen Havariebehälter ist ein solcher bereitgestellt, in den auf einfache Art und Weise ein havariertes Fahrzeug eingezogen werden kann. Der Havariebehälter selbst verfügt nicht über ein eigenes Zugmittel, beispielsweise eine Seilwinde. Vielmehr nutzt man bei diesem Havariebehälter den Umstand aus, dass ein Abschleppfahrzeug regelmäßig mit einem Zugmittel, etwa einer Seilwinde, ausgerüstet ist und nutzt diese zum Einziehen eines havarierten Hybrid- oder Elektrofahrzeuges in den bezüglich seiner Rückwand offenen Havariebehälter. Diesem Zweck dient die in der Vorderwand des Havariebehälters befindliche Zugmittelöffnung, um durch diese den Anschlusspunkt, typischerweise ein Haken mit dem daran befindlichen Zugmittel, beispielsweise ein Seil durchziehen zu können, bis dieses an das in den Havariebehälter einzuziehende Fahrzeug gebracht ist. Der Havariebehälter selbst kann sich dabei auf der abgesenkten Ladefläche eines Abschleppfahrzeuges befinden. Zur Aufnahme eines Fahrzeuges wird dann die Ladefläche mit ihrem hinteren Ende abgesenkt, sodass ein havariertes Hybrid- oder Elektrofahrzeug unter Verwendung der fahrzeugseitigen Zugmittel eingezogen werden kann. Der Havariebehälter kann sich auch hinter einem mit einem Zugmittel, beispielsweise einer Seilwinde ausgerüsteten Fahrzeuges befinden, um ein Fahrzeug darin einziehen zu können. Der Anschlusspunkt des Zugmittels kann beispielsweise an den fahrzeugseitigen Abschlepphaken angeschlossen werden. Auch besteht die Möglichkeit, das Fahrzeug mittels eines dieses rückseitig hintergreifenden Netzes in den Havariebehälter einzuziehen. Dann wird das Netz an den Anschlusspunkt des Zugmittels angeschlossen.

Bei einem solchen Havariebehälter ist das Einbringen eines Fahrzeuges erleichtert. Insbesondere wird kein Kran benötigt, wenn das Fahrzeug nicht mehr in die Wanne des Havariebehälters von selbst eingefahren werden kann. Zudem stellen sich auch bei diesem Havariebehälter dieselben Vorteile ein, wie dieses bereits zu dem vorstehend beschriebenen Havariebehälter mit dem seitlichen Ausstieg im Bezug auf die Bereitstellung eines Quarantäneraumes angesprochen sind, auch ohne dass der Havariebehälter zwingend einen Ausstieg aufweisen muss.

Die Zugmittelöffnung ist mit einer Klappe, vorzugsweise flüssigkeitsdicht, verschließbar. Die Zugmittelöffnung ist im unteren Abschnitt der Vorderwand, beispielsweise angrenzend an den Boden der Wanne, angeordnet. Dies ermöglicht die bodennahe Anordnung eines Zugmittels, sodass zum Ziehen des Fahrzeugs nur kleine Hebelwirkungen, die darauf durch das gespannte Zugmittel wirken, berücksichtigt werden müssen. Gleichzeitig wird ein Havariebehälter bereitgestellt, der, sollte das Fahrzeug anfangen zu brennen, trotz dem Vorsehen einer Zugmittelöffnung geflutet werden kann.

Vorteilhaft ist, wenn die Zugmittelöffnung zumindest 250 mm, bevorzugt 300 mm, jedoch weniger als 400 mm breit ist und die Zugmittelklappe nach außen hin verschwenkbar ist. Das seitliche Verschwenken der Zugmittelklappe verringert den erforderlichen Kraftaufwand zum Schließen der Klappe. Es wurde herausgefunden, dass die vorgenannten Abmessungen ein besonders guter Kompromiss aus erforderlicher Toleranz bezüglich des Winkels zwischen eingesetztem Zugmittel und einzuziehendem Fahrzeug ist, wobei gleichzeitig der Schwenkradius der Klappe klein gehalten werden kann. Letzteres ist notwendig, um im beengten Raum zwischen Zugmittel (beispielsweise die Winde auf einem Abschleppfahrzeug) und Vorderwand die Zugmittelklappe aufschwenken zu können.

In einem besonders bevorzugtem Ausführungsbeispiel sind die beiden vorstehend beschriebenen Aspekte - der Ausstieg und die Zugmittelöffnung - in einem Havariebehälter vereint. Ein solcher Havariebehälter ist universal einsetzbar: Ein havariertes Fahrzeug kann auf einfache Weise mit einem an einem externen Fahrzeug, beispielsweise einem Abschleppfahrzeug vorhandenen Zugmittel wie etwa einer Seilwinde in den Havariebehälter gezogen werden, Zugleich kann ein Fahrer in dem Fahrzeug beim Einziehen in den Havariebehälter Lenkunterstützung geben und dennoch auf einfache Weise das Fahrzeug verlassen. Letzteres gilt selbstverständlich auch für den Fall, dass das havarierte Fahrzeug von selbst in den Havariebehälter eingefahren wird.

Der Havariebehälter umfasst unabhängig von seiner konkreten Auslegung bezüglich des Ausstieges und/oder der Zugmittelöffnung eine Auffahrrampe, über die das havarierte Hybrid- oder Elektrofahrzeug in die Wanne einbringbar ist. Typischerweise dient die Rückwand zugleich als Auffahrrampe. Diese ist gelenkig am Boden des Havariebehälters festgelegt, um um eine horizontale Schwenkachse aufgeklappt werden zu können, und ausreichend stabil dimensioniert, sodass über sie ein Fahrzeug in das Wanneninnere des Havariebehälters gefahren oder gezogen werden kann.

Um die typischerweise gelenkig ausgelegte Anbindung von Rückwand und Boden zu schützen, insbesondere die Dichtung zum Abdichten der Rückwand gegenüber dem Boden, kann vorgesehen sein, dass im Bereich der Anbindung der Rückwand an den Boden der Wanne eine Überfahrbrücke angeschlossen ist, die auf dem Boden in Richtung der Verschwenkbarkeit der Rückwand verschiebbar ist. Die Überfahrbrücke ist an der Rückwand mittels Schanieren angeschlossen und wird damit durch diese bewegt. Durch die Schwerkraft liegt die Überfahrbrücke automatisch auf dem Boden auf, kann jedoch über diesen geschoben werden. Auf diese Weise wird eine robuste Überfahrbrücke bereitgestellt, mit der die gelenkige Anbindung der Rückwand an den Boden des Havariebehälters geschützt werden kann.

Bei einem solchen Havariebehälter kann unabhängig von seiner konkreten Auslegung, vorgesehen sein, dass die Vorderwand und die Rückwand höher sind als die Seitenwände und die Seitenwände nur so hoch sind, wie dieses zum Fluten der Batterien eines havarierten Hybrid- oder Elektrofahrzeuges notwendig ist. Die Vorderwand und die Rückwand sind dennoch höher: Die Vorderwand schützt das Fahrergehäuse eines Fahrzeuges, wenn der Havariebehälter auf der Ladefläche eines Fahrzeuges aufgeladen ist. Die Rückwand schützt, wenn ein havariertes Hybrid- oder Elektrofahrzeug transportiert wird, den rückwärtigen Verkehr. Gleichzeitig wird durch den Verzicht auf hohe Seitenwände Material und damit Gewicht eingespart, sodass der Havariebehälter leichter wird.

Der Havariebehälter kann über bodenseitige Rollen oder Walzen, typischerweise aus Metall verfügen, auf denen der Havariebehälter verfahrbar ist. So kann der Havariebehälter über eine Laderampe eines Abschleppfahrzeuges auf seine Ladefläche gezogen werden. Weist der Havariebehälter an der Vorderwand vom Wanneninnenraum wegweisend einen Aufnahmebügel auf, kann dieser zum Verfahren und Halten des Havariebehälters genutzt werden. Auch kann der Havariebehälter dann als Abrollbehälter gehandhabt werden, der auf ein entsprechendes Fahrzeug, auch mit einem darin eingebrachten havarierten Hybrid- oder Elektrofahrzeug aufgeladen werden kann.

Vorgesehen ist, dass die Seitenwände durch zumindest ein ebenes Blech gebildet sind, das an einer von dem Wanneninneren wegweisenden Rahmenstruktur aus Trägern gehalten ist. Auf diese Weise ist ein Hereinziehen eines havarierten Hybrid- oder Elektrofahrzeuges ohne weiteres möglich, wobei aufgrund der glatten Innenwandausbildung die Gefahr des Verkeilens unterbunden wird. Je nach Beschädigung des havarierten Fahrzeuges kann dieses auch problemlos entlang der Seitenwand gezogen werden.

In einer weiteren vorteilhaften Ausgestaltung ist die Wanne eines solchen Havariebehälters, und zwar unabhängig von seiner konkreten Auslegung, mit einer feuerfesten Plane oberseitig überdeckt. Hierdurch wird verhindert, dass, sollte das havarierte Hybrid- oder Elektrofahrzeug anfangen zu brennen, Flammen auf Fahrzeuge überspringen können, die benachbart zu dem Havariebehälter abgestellt sind. Dabei kann der obere Abschluss der Wanne oberhalb der Seitenwände in Längserstreckung durch ein rohr- oder stangenförmiges Element gebildet werden. Die Plane kann über die Wanne geworfen/gezogen und an den Seitenwänden festgeleg, bzw. festgezurrt werden. Aufgrund der rohr- oder stangenförmigen Elemente ist ein Einreißen oder Beschädigen der Plane unterbunden. Alternativ kann vorgesehen sein, dass die feuerfeste Plane gleich einem Vorhang in einem Schienensystem geführt ist. In einem solchen Fall verbleibt der Bereich der Plane, die das Dach des Havariebehälters bildet, ortsfest.

Sind die Vorderwand und die Rückwand höher als die Seitenwände, kann vorgesehen sein, dass der Havariebehälter im Bereich der Rückwand einen Rahmen umfasst, durch den ein havariertes Hybrid- oder Elektrofahrzeug in die Wanne einbringbar ist. Im Bereich der oberen, zu den Seiten weisenden Abschlüssen der Vorderwand und des Rahmens können die rohrförmigen Elemente in Form von Rohrträgern angeordnet sind. Diese dienen zum einen der Stabilisierung des Rahmens der Vorderwand gegenüber und gleichzeitig als Träger für die Plane.

Vorteilhaft ist es, wenn die Rückwand niedriger ist als die Vorderwand und zwischen dem oberen Abschluss der Rückwand, wenn in ihrer Geschlossen-Stellung, und dem unteren Abschluss des oberen Trägers des Rahmens eine Öffnung gegeben ist. Diese Öffnung kann durch eine von dem oberen Träger herabhängende feuerfeste Plane abgedeckt sein. Die Öffnung stellt eine Austrittsöffnung für bei einem Brand entstehende Gase bereit und ist über dem Brandherd - der Batterie - angeordnet, sodass ein Brand durch diese Öffnung nicht noch mit zusätzlichem Sauerstoff versorgt wird.

Besonders vorteilhaft ist der vorbeschriebene Havariebehälter in einer Anordnung mit einem Abschleppfahrzeug mit einer Ladefläche, wobei der Havariebehälter auf der Transportfläche angeordnet ist. Die Ladefläche ist typischerweise als Laderampe ausgeführt. Weist der Havariebehälter eine Zugmittelöffnung auf, ist es ferner vorteilhaft, wenn das Abschleppfahrzeug eine am fahrerhausseitigen Ende der Laderampe angeordnete Winde aufweist, deren Zugseil durch die Zugmittelöffnung hindurchführbar ist, um so ein Fahrzeug in den Havariebehälter ziehen zu können.

Die Erfindung wird nachstehend anhand eines Ausführungsbeispiels unter Bezugnahme auf die beiliegenden Figuren erläutert. Es zeigen:
- **Fig. 1:**: einen Havariebehälter, bei dem alle verschwenkbaren Elemente in ihrer Geschlossen-Stellung gezeigt sind,
- **Fig. 2:**: der Havariebehälter der Figur 1, bei dem die verschwenkbaren Elemente in ihrer Offen-Stellung gezeigt sind, und
- **Fig. 3:**: ein weiterer Havariebehälter mit einer die Wanne überdeckenden Plane.

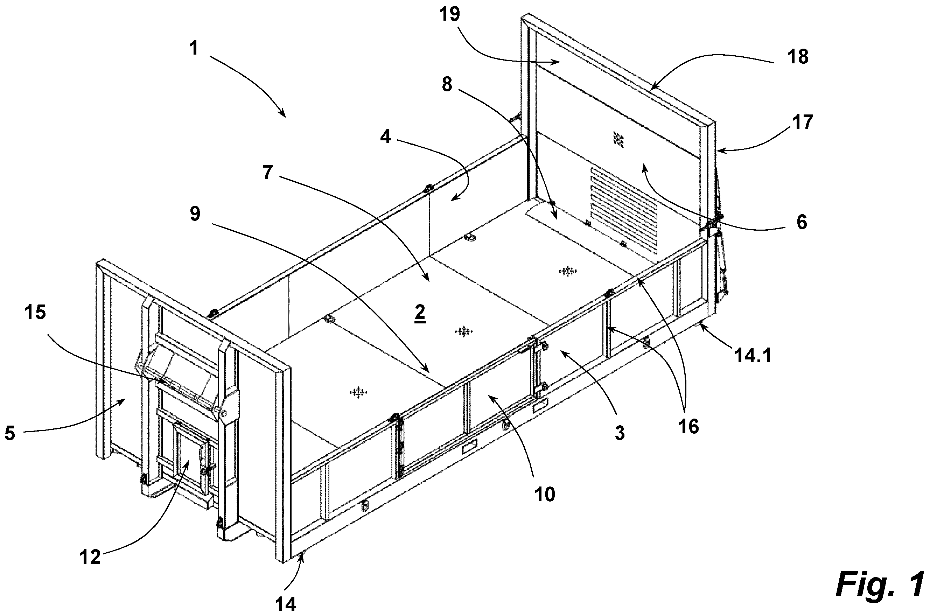

Figur 1 zeigt einen Havariebehälter 1, umfassend einen Boden 2, zwei Seitenwände 3, 4 sowie eine Vorderwand 5 und eine Rückwand 6. Zusammen bilden der Boden 2, die Seitenwände 3, 4, die Vorderwand 5 und die Rückwand 6 eine Wanne 7. Diese Elemente sind, wenn die Rückwand 6 in ihrer Geschlossen-Stellung ist, flüssigkeitsdicht miteinander verbunden. Typischerweise ist der Havariebehälter 1 aus Stahl gefertigt, wobei zumindest die in das Wanneninnere weisenden Oberflächen mit einer Korrusionsschutzschicht ausgerüstet sind. Die Seitenwände 3, 4 sind länger als die Vorderwand 5 bzw. die Rückwand 6, sodass die Wanne 7 einen rechteckförmigen Grundriss aufweist. Diese ist von ihrer Größe dergestalt ausgelegt, dass in die Wanne 7 ein havariertes Hybrid- oder Elektrofahrzeug mit einer beschädigten, brennenden oder möglicherweise sich entzündenden Batterie aufnehmbar ist und gleichzeitig der Havariebehälter 1 auf ein Abschleppfahrzeug aufnehmbar ist.

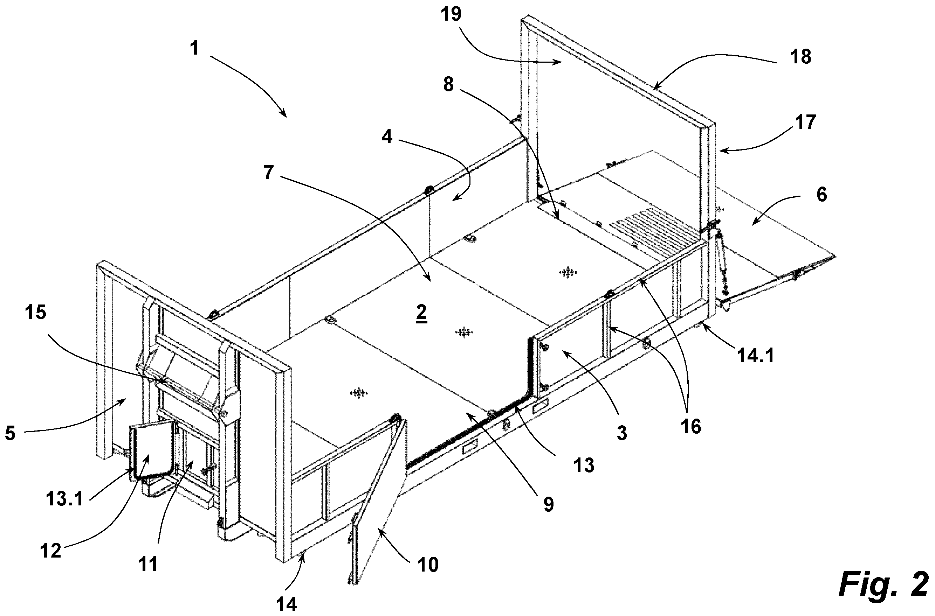

Die Rückwand 6 ist zum Öffnen und Schließen der Wanne 7 verstellbar und ist bei diesem Ausführungsbeispiel gleichzeitig als Auffahrrampe ausgebildet. Hierzu ist die Rückwand 6 gelenkig an den Boden 2 angeschlossen. In ihrer Offen-Stellung (siehe Figur 2) kann über die Rückwand 6 ein havariertes Fahrzeug in das Wanneninnere eingebracht werden. Damit die Wanne 7 bei geschlossener Rückwand 6 flüssigkeitsdicht ist, sind zwischen der Rückwand 6 und dem Boden 2 sowie den Stirnseiten der Seitenwänden 3, 4 Dichtungen angeordnet (nicht näher dargestellt).

Um die Dichtung zwischen Boden 2 und Rückwand 6 zu schützen, ist im Bereich der Anbindung der Rückwand 6 an den Boden 2 gelenkig eine Überfahrbrücke 8 an der Rückwand 6 angeschlossen, die auf dem Boden 2 in Richtung der Verschwenkbarkeit der Rückwand 6 verschiebbar ist. Wird die Rückwand 6 geöffnet, verschiebt sich die Überfahrbrücke 8 nach hinten (vgl. hierzu auch Figur 2). Ein in das Wanneninnere des Havariebehälters 1 gezogenes Fahrzeug beschädigt somit nicht die unter der Überfahrbrücke 8 liegenden Dichtungen und Anbindungen.

Der Havariebehälter 1 verfügt des Weiteren über einen Ausstieg 9, der in Figur 1 mit einer Ausstiegstür 10 verschlossen dargestellt ist. In Figur 2 ist die Ausstiegstür 10 geöffnet, sodass der Ausstieg 9 deutlich erkennbar ist. Auch die Ausstiegstür 10 ist in ihrer Geschlossen-Stellung gegenüber der Seitenwand 3 flüssigkeitsdicht angeordnet. Die dazu benötigte Dichtung 13 ist in Figur 2 erkennbar. Bei dem dargestellten Ausführungsbeispiel ist die Dichtung 13 an dem feststehenden Teil des Ausstieges 9 - einer Seitenwandzarge - angeordnet. Der Ausstieg 9 ist in diesem Ausführungsbeispiel etwa 1,70 m breit und weist in seiner Mitte in etwa einen Abstand von 2,4 m von der Vorderwand 5 auf. Erkennbar ist, dass der Ausstieg 9 außermittig bezogen auf die Längserstreckung der Seitenwand 3 angeordnet ist.

In diesem Ausführungsbeispiel weist nur die eine Seitenwand 3 einen Ausstieg 9 auf. Dies ist die von der Wanne 7 aus in Blickrichtung zur Vorderwand 5 linke Seitenwand 3. Die Ausstiegstür 10 ist seitlich verschwenkbar an der Seitenwand 3 gehalten und zwar, wie auch in Figur 2 erkennbar ist, mit Schwenkrichtung in Richtung zur Vorderwand 5. Damit ist die Schwenkrichtung der Ausstiegstür 10 gleichsinnig zu der Schwenkrichtung der Fahrertür eines vorwärts in die Wanne 7 eingebrachten Fahrzeuges. Ein Fahrer, der das havarierte Fahrzeug in den Havariebehälter 1 gefahren oder auch nur gelenkt hat, kann so bei geöffneter Ausstiegstür 10 die Fahrertür öffnen und aussteigen. Anschließend kann die Fahrzeugtür und die Ausstiegstür 10 geschlossen werden.

Der Havariebehälter 1 umfasst des Weiteren eine Zugmittelöffnung (in Figur 2 mit dem Bezugszeichen 11 gekennzeichnet), welche in Figur 1 durch eine Zugmittelklappe 12 verschlossen ist. Ist die Zugmittelklappe 12 geschlossen, erfolgt dies bei diesem Ausführungsbeispiel flüssigkeitsdicht. In Figur 2 ist ein Teil der dazugehörigen von der Zugmittelklappe 12 getragenen Dichtung 13.1 erkennbar. Durch die Zugmittelöffnung 11 ist ein Zugmittel hindurchführbar, mit dem ein havariertes Fahrzeug in das Wanneninnere einziehbar ist.

Die Zugmittelöffnung 11 ist in diesem Ausführungsbeispiel im an den Boden 2 grenzenden unteren Bereich der Seitenwand 5 angeordnet und etwa 300 mm breit und etwa 470 mm hoch. Dies ist ausreichend, um verschiedene Winkel des Zugmittels bezogen auf ein einzubringendes Fahrzeug zu ermöglichen, ohne dass das Zugmittel in Kontakt mit der Einfassung der Zugmittelöffnung 11 kommt.

Durch die flüssigkeitsdichte Bereitstellung der Wanne 7 kann ein in dem Havariebehälter 1 befindliches Fahrzeug mit Wasser geflutet werden, insbesondere dessen Batterien. Auf diese Weise ist ein besonders effektives Kühlen derselben möglich, ohne dass die Gefahr besteht, dass der Brand sich auf neben dem Havariebehälter stehende Gegenstände, etwa weitere Fahrzeuge, ausweitet. Zum Fluten und auch zum kontrollierten Ablassen von in der Wanne befindlicher Kühlflüssigkeit kann der Havariebehälter 1 über entsprechenden Anschlussstutzen (in den Figuren nicht gezeigt) verfügen.

Der Havariebehälter 1 verfügt bodenseitig über vier metallene Walzen, von denen nur zwei in den Figuren mit Bezugszeichen 14, 14.1 sichtbar sind, mit denen der Havariebehälter 1 verfahrbar ist. Bei diesen Walzen 14, 14.1 handelt es sich um solche, wie diese üblicherweise bei Abrollcontainern eingesetzt werden. Zusätzlich verfügt der Havariebehälter 1 an seiner Vorderwand 5 über einen stabilen Aufnahmebügel 15. Mit dem Aufnahmebügel 15 kann der Havariebehälter 1 gleich einem Abrollcontainer auf ein Transportfahrzeug geladen werden.

Die Vorderwand 5 und die Rückwand 6 sind höher als die Seitenwände 3, 4, wobei die Seitenwände 3, 4 nur so hinreichend hoch sind, dass bei einer Flutung der Wanne 7 nur die Batterien eines havarierten Fahrzeuges geflutet werden. Auf diese Weise wird Material und Gewicht gespart, so dass der Havariebehälter 1 relativ leichtgewichtig ist. Ferner ist vorgesehen, dass die in das Wanneninnere weisende Oberfläche der Seitenwände 2, 3 durch ebene Bleche gebildet sind, die an einer Rahmenstruktur (in den Figuren beispielhaft für die Seitenwand 3 mit Bezugszeichen 16 gekennzeichnet) gehalten sind. Die ebene Ausbildung der Bleche ermöglicht ein hindernisfreies seitliches Führen eines havarierten Fahrzeuges, wenn es in den Havariebehälter 1 hineingezogen wird.

Der Havariebehälter 1 verfügt des Weiteren im Bereich der Rückwand 6 über einen Rahmen 17. Der Rahmen 17 fluchtet mit dem oberen Abschluss seines oberen Querträgers 18 mit dem oberen Abschluss der Vorderwand 5. Dabei ist der obere Träger 18 so hoch angeordnet, dass ein Fahrzeug unter diesem hindurch in das Wanneninnere eingebracht werden kann. Gleichzeitig ist zwischen dem unteren Abschluss des oberen Querträgers 18 und dem oberen Abschluss der sich in ihrer Geschlossen-Stellung befindlichen Rückwand 6 eine verbleibende Öffnung 19 vorgesehen. Auf diese wird im der Folgenden Bezug genommen.

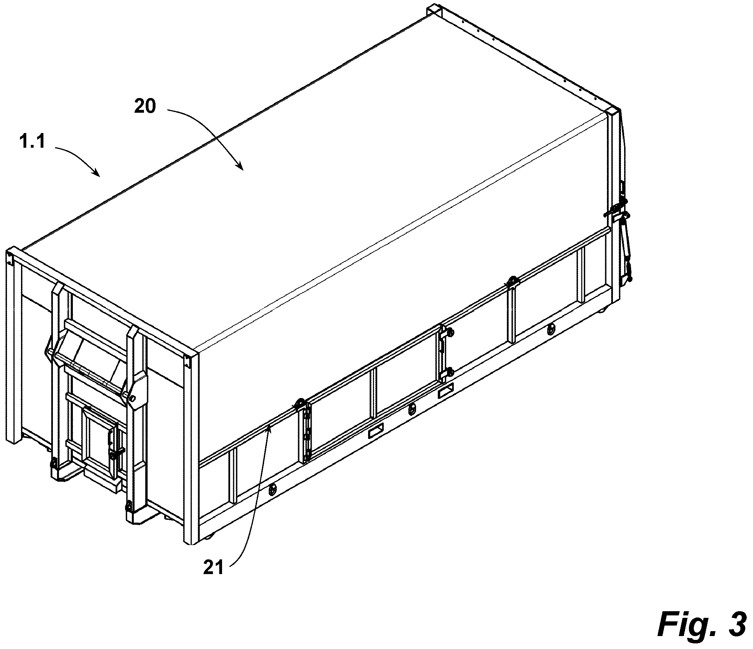

Figur 3 zeigt einen weiteren Havariebehälter 1.1, welcher mit einer feuerfesten Plane 20 ausgestattet ist. Der Havariebehälter 1.1 ist aufgebaut wie der vorstehend beschriebene Havariebehälter 1. Daher gelten diese Ausführungen gleichermaßen für den Havariebehälter 1.1. Die Plane 20 überdeckt die Wanne und schließt diese seitlich und oberseitig ab. Zum Abstützen der Plane 20 verfügt der Havariebehälter 1.1 über den vorderen und hinteren Rahmen verbindende Länsgträger. Über diese ist die feuerfeste Plane 20 gelegt bzw. gezogen. Die unteren, in diesem Ausführungsbeispiel herabhängenden Enden 21 der Plane 20 sind zumindest abschnittsweise mit den Seitenwänden 3, 4 über Spannelemente in an sich bekannter Weise verbunden. Sollte es zu einem Brand in dem Havariebehälter 1.1 kommen, können entstehende Abgase durch die zuvor beschriebenen Öffnung 19 zwischen Rückwand 6 und oberem Träger 18 des Rahmens 17 entweichen. Um zu verhindern, dass in die Öffnung 19 Wasser, beispielsweise Regenwasser, eindringt, kann vorgesehen sein, dass ausgehend von dem oberen Träger 18 des Rahmens 17 ein aufgrund der Perspektive dieser Figur nicht erkennbarer Planenabschnitt die Öffnung überdeckt und von dem oberen

Träger 18 herunterhängt. Im Falle eines Überdrucks in der Wanne würde der Planenabschnitt problemlos angehoben werden. Durchaus möglich ist auch die Auslegung der feuerfesten Plane, dass diese luftdurchlässig ist. Auch in einem solchen Fall ist das Vorsehen der vorbeschriebenen Öffnungen 19 sinnvoll, da ein plötzlicher Druckanstieg ohne weiteres über diese Öffnung 19 entweichen kann, was durch die luftdurchlässige Plane möglicherweise nicht mit der gewünschten Geschwindigkeit möglich ist.

Die Erfindung ist anhand von Ausführungsbeispielen beschrieben worden.

Ohne den Schutzbereich, beschrieben durch die Patentansprüche, zu verlassen, ergeben sich für den Fachmann zahlreiche weitere Ausgestaltungen, den Gegenstand der Erfindung zu verwirklichen, ohne dass diese im Rahmen diese Ausführungen näher erläutert werden müssten.

### Bezugszeichenliste

- 1, 1.1: Havariebehälter
- 2: Boden
- 3: Seitenwand
- 4: Seitenwand
- 5: Vorderwand
- 6: Rückwand
- 7: Wanne
- 8: Überfahrbrücke
- 9: Ausstieg
- 10: Ausstiegstür
- 11: Zugmittelöffnung
- 12: Zugmittelklappe
- 13, 13.1: Dichtung
- 14, 14.1: Walze
- 15: Aufnahmebügel
- 16: Rahmenstruktur
- 17: Rahmen
- 18: oberer Querträger
- 19: Öffnung
- 20: feuerfeste Plane
- 21: Planenende

## Patentansprüche

1. Havariebehälter (1, 1.1) zum Aufnehmen eines havarierten Hybridoder Elektrofahrzeuges, insbesondere mit einer beschädigten, brennenden oder möglicherweise sich entzündenden Batterie, umfassend eine aus einem Boden (2), zwei Seitenwänden (3, 4), einer Vorderwand (5) und einer Rückwand (6) gebildeten Wanne (7), wobei die Seitenwände (3, 4) länger sind als die Vorderwand (5) und die Rückwand (6), wobei die Rückwand (6) zum Öffnen und Schließen der Wanne (7) ganz oder teilweise verstellbar ist und wobei die Wanne (7) bei geschlossener Rückwand (6) flüssigkeitsdicht ist, **dadurch gekennzeichnet, dass** die Vorderwand (5) eine Zugmittelöffnung (11) und eine Klappe (12) aufweist, durch die die Zugmittelöffnung (11) verschließbar ist und wobei durch die Zugmittelöffnung (11) der Anschlusspunkt, etwa ein Haken, eines nicht am Havariebehälter (1) festgelegten Zugmittels, etwa einer Seilwinde, hindurchführbar ist, wobei die Zugmittelöffnung (11) im unteren Abschnitt der Vorderwand (5) angeordnet ist und wobei mit dem durch die Zugmittelöffnung (11) geführten Zugmittel ein havariertes Hybrid- oder Elektrofahrzeug in die Wanne (7) ziehbar ist.

2. Havariebehälter nach Anspruch 2, **dadurch gekennzeichnet, dass** die Zugmittelöffnung (11) in dem an den Boden (2) angrenzenden Bereich der Vorderwand (5) angeordnet ist und die Zugmittelklappe (12) die Zugmittelöffnung (11) in ihrer geschlossenen Stellung flüssigkeitsdicht verschließt.

3. Havariebehälter nach einem der Ansprüche 1 bis 2, **dadurch gekennzeichnet, dass** der Havariebehälter (1, 1.1) eine Auffahrrampe umfasst, über die das Hybrid- oder Elektrofahrzeug in die Wanne (7) einbringbar ist.

4. Havariebehälter nach Anspruch 3, **dadurch gekennzeichnet, dass** die Rückwand (6) als Auffahrrampe dient.

5. Havariebehälter nach einem der Ansprüche 1 bis 4, **dadurch gekennzeichnet, dass** im Bereich der Anbindung der Rückwand (6) an den Boden (2) gelenkig eine Überfahrbrücke (8) an der Rückwand (6) angeschlossen ist, die auf dem Boden (2) in Richtung der Verschwenkbarkeit der Rückwand (6) verschiebbar ist.

6. Havariebehälter nach einem der Ansprüche 1 bis 5, **dadurch gekennzeichnet, dass** zumindest eine Seitenwand (3) einen mittels einer Ausstiegstür (10) flüssigkeitsdicht verschließbaren Ausstieg (9) aufweist, sodass eine Fahrzeugtür, insbesondere die Fahrertür eines in die Wanne (7) eingebrachten Fahrzeuges in den geöffneten Ausstieg (9) hinein aufgeschwenkt werden kann.

7. Havariebehälter nach Anspruch 6, **dadurch gekennzeichnet, dass** die Mitte des Ausstiegs (9) in Bezug auf die Längserstreckung der Seitenwand (3) außermittig, insbesondere im Verhältnis 7 : 3 bis 5,5 : 4,5 angeordnet ist und eine Öffnungsweite zwischen 1,4 m und 2 m aufweist.

8. Havariebehälter nach Anspruch 6, **dadurch gekennzeichnet, dass** beide Seitenwände einen Ausstieg aufweisen, wobei die Mittelpunkte der Ausstiege im Wesentlichen punktsymmetrisch bezüglich des Mittelpunkts des Bodens angeordnet sind.

9. Havariebehälter nach Anspruch 6, **dadurch gekennzeichnet, dass** die von der Wanne (7) aus in Blickrichtung zur Vorderwand (5) linke Seitenwand (3) den Ausstieg aufweist.

10. Havariebehälter nach Anspruch **dadurch gekennzeichnet, dass** die Ausstiegstür (10) seitlich verschwenkbar an der Seitenwand (3) gehalten ist, vorzugsweise mit gleichsinniger Schwenkrichtung mit der Fahrzeugtür eines in die Wanne (7) eingebrachten Fahrzeugs.

11. Havariebehälter nach einem der Ansprüche 1 bis 10, **dadurch gekennzeichnet, dass** die Vorderwand (5) und die Rückwand (6) höher sind als die Seitenwände (3, 4) und dass die Seitenwände (3, 4) nur hinreichend hoch sind, wie dieses zum Fluten der Batterien eines in dem Wanneninneren befindlichen Hybrid- oder Elektrofahrzeugs notwendig ist.

12. Havariebehälter nach einem der Ansprüche 1 bis 11, **dadurch gekennzeichnet, dass** der Havariebehälter (1, 1.1) über bodenseitige Walzen (14, 14.1) verfügt, mit denen der Havariebehälter (1, 1.1) verfahrbar ist.

13. Havariebehälter nach einem der Ansprüche 1 bis 12, **dadurch gekennzeichnet, dass** die Wanne (7) mit einer feuerfesten Plane (20) überdeckt ist.

14. Havariebehälter nach einem der Ansprüche 1 bis 13, **dadurch gekennzeichnet, dass** im Bereich der Rückwand (6) ein Rahmen (17) angeordnet ist, durch den ein havariertes Hybrid- oder Elektrofahrzeug in die Wanne (7) einbringbar ist und wobei zwischen dem oberen Abschluss der Rückwand (6), wenn in ihrer Geschlossen-Stellung befindlich, und dem unteren Abschluss des oberen Querträgers (18) des Rahmens (17) eine Öffnung (19) vorgesehen ist.

15. Abschleppfahrzeug mit einer Laderfläche und einer im fahrerhausseitigen Endbereich der Ladefläche angeordneten Winde, **dadurch gekennzeichnet, dass** auf der Laderampe ein Havariebehälter (1, 1.1) nach einem der Ansprüche 1 bis 14 angeordnet ist.

## Claims

1. A container for damaged items (1, 1.1) for accommodating a damaged hybrid or electric vehicle, in particular with a damaged, burning or possibly igniting battery, comprising a tray (7) formed from a base (2), two side walls (3, 4), a front wall (5) and a rear wall (6), wherein the side walls (3, 4) are longer than the front wall (5) and the rear wall (6), wherein the rear wall (6) is fully or partially adjustable for opening and closing the tray (7), and wherein the tray (7) is liquid-tight when the rear wall (6) is closed, **characterized in that** the front wall (5) has a traction means opening (11) and a flap (12) through which the traction means opening (11) can be closed, and wherein the connection point, for example a hook, of a traction means not fixed to the container for damaged items (1), for example a cable winch, can be passed through the traction means opening (11), wherein the traction means opening (11) is arranged in the lower section of the front wall (5), and wherein a damaged hybrid or electric vehicle can be pulled into the tray (7) using the traction means guided through the traction means opening (11).

2. The container for damaged items according to claim 2, **characterized in that** the traction means opening (11) is arranged in the region of the front wall (5) adjacent to the base (2) and the traction means flap (12) closes the traction means opening (11) in a liquid-tight manner in its closed position.

3. The container for damaged items according to any one of claims 1 to 2, **characterized in that** the container for damaged items (1, 1.1) comprises a loading ramp via which the hybrid or electric vehicle can be introduced into the tray (7).

4. The container for damaged items according to claim 3, **characterized in that** the rear wall (6) serves as a loading ramp.

5. The container for damaged items according to any one of claims 1 to 4, **characterized in that** in the region of the connection of the rear wall (6) to the base (2) a drive-over bridge (8) is connected in an articulated manner to the rear wall (6), which bridge is displaceable on the base (2) in the direction of the rotation of the rear wall (6).

6. The container for damaged items according to any one of claims 1 to 5, **characterized in that** at least one side wall (3) has an exit (9) which can be closed in a liquid-tight manner by means of an exit door (10), so that a vehicle door, in particular the driver's door of a vehicle brought into the tray (7) can be pivoted into the opened exit (9).

7. The container for damaged items according to claim 6, **characterized in that** the center of the exit (9) is arranged off-center with respect to the longitudinal extent of the side wall (3), in particular in the ratio 7:3 to 5.5:4.5 and has an opening width between 1.4 m and 2 m.

8. The container for damaged items according to claim 6, **characterized in that** both side walls have an exit, the centers of the exits being arranged substantially point-symmetrically with respect to the center of the base.

9. The container for damaged items according to claim 6, **characterized in that** the left side wall (3) viewed from the tray (7) in the direction of the front wall (5) has the exit.

10. The container for damaged items according to claims 6, **characterized in that** the exit door (10) is held laterally pivotable on the side wall (3), preferably with the same pivoting direction as the vehicle door of a vehicle brought into the tray (7).

11. The container for damaged items according to any one of claims 1 to 10, **characterized in that** the front wall (5) and the rear wall (6) are higher than the side walls (3, 4) and that the side walls (3, 4) are only sufficiently high as is necessary for flooding the batteries of a hybrid or electric vehicle located in the interior of the tray.

12. The container for damaged items according to any one of claims 1 to 11, **characterized in that** the container for damaged items (1, 1.1) has rollers (14, 14.1) on the base side with which the container for damaged items (1, 1.1) can be moved.

13. The container for damaged items according to any one of claims 1 to 12, **characterized in that** the tray (7) is covered with a fireproof tarpaulin (20).

14. The container for damaged items according to any one of claims 1 to 13, **characterized in that** a frame (17) is arranged in the region of the rear wall (6), through which a damaged hybrid or electric vehicle can be introduced into the tray (7), and wherein an opening (19) is provided between the upper end of the rear wall (6), when in its closed position, and the lower end of the upper cross member (18) of the frame (17).

15. A towing vehicle with a loading surface and a winch arranged in the end region of the loading surface on the driver's cab side, **characterized in that** a container for damaged items (1, 1.1) according to any one of claims 1 to 14 is arranged on the loading ramp.

## Revendications

1. Récipient d'avarie (1, 1.1) destiné à accueillir un véhicule hybride ou électrique en situation d'avarie, en particulier avec une batterie endommagée, en feu ou susceptible de s'enflammer, comprenant une cuve (7) formée d'un plancher (2), de deux parois latérales (3, 4), d'une paroi avant (5) et d'une paroi arrière (6), dans lequel les parois latérales (3, 4) sont plus longues que la paroi avant (5) et la paroi arrière (6), dans lequel la paroi arrière (6) est entièrement ou partiellement réglable pour ouvrir et fermer la cuve (7), et dans lequel la cuve (7) est étanche aux liquides lorsque la paroi arrière (6) est fermée, **caractérisé en ce que** la paroi avant (5) présente une ouverture de moyen de traction (11)et un volet (12) à travers lequel l'ouverture de moyen de traction (11) peut être fermée, et dans lequel le point de connexion, tel qu'un crochet, d'un dispositif de traction non fixé au récipient d'avarie (1), tel qu'un treuil à câble, peut être passé à travers l'ouverture de moyen de traction (11), dans lequel l'ouverture de moyen de traction (11) est disposée dans la partie inférieure de la paroi avant (5) et dans lequel un véhicule hybride ou électrique endommagé peut être tiré dans la cuve (7) avec les moyens de traction guidés à travers l'ouverture de moyen de traction (11).

2. Récipient d'avarie selon la revendication 2, **caractérisé en ce que** l'ouverture de moyen de traction (11) est disposée dans la zone de la paroi avant (5) adjacente au plancher (2) et le volet de moyen de traction (12) ferme l'ouverture de moyen de traction (11) de manière étanche aux liquides dans sa position fermée.

3. Récipient d'avarie selon l'une des revendications 1 à 2, **caractérisé en ce que** le récipient d'avarie (1, 1.1) comprend une rampe de chargement par laquelle le véhicule hybride ou électrique peut être introduit dans la cuve (7).

4. Récipient d'avarie selon la revendication 3, **caractérisé en ce que** la paroi arrière (6) sert de rampe de chargement.

5. Récipient d'avarie selon l'une des revendications 1 à 4, **caractérisé en ce que,** dans la zone de liaison de la paroi arrière (6) au plancher (2), un pont roulant (8) est relié de manière articulée à la paroi arrière (6), lequel pont est déplaçable sur le plancher (2) dans le sens de la capacité de pivotement de la paroi arrière (6).

6. Récipient d'avarie selon l'une des revendications 1 à 5, **caractérisé en ce qu'**au moins une paroi latérale (3) présente une sortie (9) qui peut être fermée de manière étanche aux liquides au moyen d'une porte de sortie (10), de sorte qu'une porte de véhicule, en particulier la porte du conducteur d'un véhicule amené dans la cuve (7), peut être pivotée dans la sortie ouverte (9).

7. Récipient d'avarie selon la revendication 6, **caractérisé en ce que** le centre de la sortie (9) est disposé de manière décentrée par rapport à l'étendue longitudinale de la paroi latérale (3), en particulier dans le rapport 7:3 à 5,5:4,5 et présente une largeur d'ouverture comprise entre 1,4 m et 2 m.

8. Récipient d'avarie selon la revendication 6, **caractérisé en ce que** les deux parois latérales présentent une sortie, dans lequel les centres des sorties sont disposés de manière sensiblement symétrique par rapport au centre du plancher.

9. Récipient d'avarie selon la revendication 6, **caractérisé en ce que** la paroi latérale gauche (3) de la cuve (7) dans la direction de vue vers la paroi avant (5) présente la sortie.

10. Récipient d'avarie selon la revendication 6, **caractérisé en ce que** la porte de sortie (10) est maintenue pivotante latéralement sur la paroi latérale (3), de préférence avec la même direction de pivotement que la porte du véhicule d'un véhicule amené dans la cuve (7).

11. Récipient d'avarie selon l'une des revendications 1 à 10, **caractérisé en ce que** la paroi avant (5) et la paroi arrière (6) sont plus hautes que les parois latérales (3, 4) et que les parois latérales (3, 4) sont seulement suffisamment hautes pour permettre le noyage des batteries d'un véhicule hybride ou électrique se trouvant à l'intérieur de la cuve.

12. Récipient d'avarie selon l'une des revendications 1 à 11, **caractérisé en ce que** le récipient d'avarie (1, 1.1)dispose de rouleaux (14, 14.1)sur le plancher avec lesquels le récipient d'avarie (1, 1.1) peut être déplacé.

13. Récipient d'avarie selon l'une des revendications 1 à 12, **caractérisé en ce que** la cuve (7) est recouverte d'une bâche ignifuge (20).

14. Récipient d'avarie selon l'une des revendications 1 à 13, **caractérisé en ce qu'**un cadre (17) est disposé dans la zone de la paroi arrière (6), à travers lequel un véhicule hybride ou électrique en situation d'avarie peut être introduit dans la cuve (7), et dans lequel une ouverture (19) est prévue entre l'extrémité supérieure de la paroi arrière (6), lorsqu'elle est dans sa position fermée, et l'extrémité inférieure de la traverse supérieure (18) du cadre (17).

15. Véhicule tracteur avec une zone de chargement et un treuil disposé dans la zone d'extrémité de la zone de chargement du côté de la cabine du conducteur, **caractérisé en ce qu'**un récipient d'avarie (1, 1.1) selon l'une des revendications 1 à 14 est disposé sur la rampe de chargement.
